(19) Europäisches Patentamt
European Patent Office
Office européen des brevets

(11) **EP 1 685 026 B1**

(12) **EUROPÄISCHE PATENTSCHRIFT**

(45) Veröffentlichungstag und Bekanntmachung des Hinweises auf die Patenterteilung:
**30.04.2008 Patentblatt 2008/18**

(21) Anmeldenummer: **04803138.9**

(22) Anmeldetag: **12.11.2004**

(51) Int Cl.:
***B64D 45/00*** *(2006.01)*

(86) Internationale Anmeldenummer:
**PCT/EP2004/012861**

(87) Internationale Veröffentlichungsnummer:
**WO 2005/047108 (26.05.2005 Gazette 2005/21)**

(54) **VERFAHREN ZUR LASTBEGRENZUNG IN ANTRIEBSSYSTEMEN FÜR FLUGZEUGHOCHAUFTRIEBSSYSTEME**

METHOD FOR LOAD LIMITATION IN DRIVE SYSTEMS FOR A HIGH LIFT SYSTEM FOR AEROPLANES

PROCEDE POUR LIMITER LA CHARGE DANS UN SYSTEME D'ENTRAINEMENT POUR SYSTEME DE PORTANCE ELEVEE POUR AVION

(84) Benannte Vertragsstaaten:
**DE ES FR GB IT SE**

(30) Priorität: **12.11.2003 DE 10353672**

(43) Veröffentlichungstag der Anmeldung:
**02.08.2006 Patentblatt 2006/31**

(73) Patentinhaber: **Airbus Deutschland GmbH**
**21129 Hamburg (DE)**

(72) Erfinder:
• **CARL, Udo**
**21077 Hamburg (DE)**
• **NEUMANN, Uwe**
**22299 Hamburg (DE)**
• **HOLERT, Ben**
**22301 Hamburg (DE)**

(74) Vertreter: **Vogel, Andreas**
**Patentanwälte Bals & Vogel,**
**Universitätsstrasse 142**
**44799 Bochum (DE)**

(56) Entgegenhaltungen:
**EP-A- 0 922 633**　　**US-A- 3 841 589**
**US-A- 4 260 121**

EP 1 685 026 B1

**EP 1 685 026 B1**

**Beschreibung**

Die Erfindung betrifft ein Verfahren und eine Vorrichtung zur Lastbegrenzung in einem Flugzeughochauftriebssystem, wobei das Flugzeughochauftriebssystem ein verzweigtes Antriebssystem zur mechanischen Leistungsübertragung an Antriebsstationen einzelner Segmente von Landeklappen- und/oder Vorflügelklappensystemen, Positionssensoren und eine Antriebseinheit aufweist.

Es sind bereits Flugzeughochauftriebssysteme mit einer zentralen Antriebseinheit und einem verzweigten Antriebssystem zur mechanischen Leistungsübertragung an die Antriebsstationen einzelner Segmente von Landeklappen-/Vorflügelklappensystemen bekannt. Im Falle der Blockierung eines Landeklappensegmentes und/oder eines Getriebes des verzweigten Antriebssystems müsste dieses Segment und der entsprechende Zweig des Antriebssystems und/oder das Getriebe und der entsprechende Zweig des Antriebssystems die gesamte Antriebsenergie der Antriebseinheit als Reaktionsmoment aufnehmen und dementsprechend massiv und schwer gebaut sein.

Als Schutzvorrichtungen sind in derartigen Flugzeughochauftriebssystemen mit einem verzweigten Antriebssystem mechanische Lastbegrenzereinrichtungen (engl. Torque Limiter) vorgesehen, um bei Blockierung eines Landeklappensegmentes und/oder eines Getriebes des verzweigten Antriebssystems, eine lokale Überlast in dem Segment und dem entsprechende Zweig des Antriebssystems und/oder dem Getriebe und dem entsprechende Zweig des Antriebssystems zu vermeiden. Dabei ist das Landeklappensegment durch den Stationslastbegrenzer (engl. Actuation Torque Limiter) und das verzweigte Antriebssystem durch den Systemlastbegrenzer (engl. System Torque Limiter) geschützt.

Auf der Basis mechanischer Komponenten stellen solche Lastbegrenzereinrichtungen bereits eine weitgehend optimierte Lösung dar. Allerdings erhöhen diese Systeme aufgrund ihres komplexen Aufbaus jedoch die Masse und die Betriebskosten eines mit ihnen ausgerüsteten Flugzeuges, darüber hinaus werden sie funktionsbedingt nur bei Fehlerfällen aktiviert. Bei engen Auslegungstoleranzen und bei einer parametrisch sensitiven Systemdynamik können diese Lastbegrenzereinrichtungen schließlich auch bei intaktem und fehlerfrei arbeitendem Antriebssystem ansprechen und dann das gesamte System blockieren.

Aus der EP 0 922 633 A2 ist ein Hochauftriebssystem eines Flugzeugs bekannt, welches eine zentrale Antriebseinheit und über jeweilige Antriebsstränge mit dieser gekoppelte Hochauftriebsklappen enthält. An den einzelnen Hochauftriebsklappen sind jeweils Positionssensoren vorgesehen, welche ein die Stellung der jeweiligen Klappe repräsentierendes Ausgangssignal erzeugen. Die Ausgangssignale der einzelnen Klappen werden von einer elektronischen Klappensteuereinheit miteinander verglichen und ausgewertet. Wenn aus den Ausgangssignalen der Positionssensoren ein Fehler erkannt wird, wird die zentrale Antriebseinheit angehalten. Dadurch sollen zueinander verdrehte Stellungen der einzelnen Klappen vermieden werden.

Auch aus der US 4 260 121 ist ein Hochauftriebssystem eines Flugzeugs bekannt, welches eine zentrale Antriebseinheit und über jeweilige Antriebsstränge mit dieser gekoppelte Hochauftriebsklappen enthält. Die zentrale Antriebseinheit umfasst zwei Hydraulikmotoren, welche über ein Differentialgetriebe mit einer zentral in den Antriebssträngen angeordneten Welle gekoppelt sind. An den Motoren und an der zentralen Welle sind jeweils deren Drehbewegung erfassende Sensoren vorgesehen. Die Ausgangssignale der Sensoren werden von einer Steuereinheit überwacht und in der Weise ausgewertet, dass die Antriebsstränge des Hochauftriebssystems durch an den Flügelenden vorgesehene Bremsen in ihrer jeweiligen Stellung festgelegt werden, wenn eine Abweichung zwischen Motorstellung und Wellenstellung einen vorgegebenen Wert überschreitet. Dadurch soll ein plötzliches Rückfahren der Hochauftriebsklappen aufgrund der auf diese wirkenden aerodynamischen Kräfte bei einer Unterbrechung der Kraftübertragung zwischen den Hydraulikmotoren und der zentralen Welle vermieden werden. Weiterhin sollen durch bei den Bremsen an den Flügelenden vorgesehene, die Drehung der Antriebsstränge erfassende Sensoren eine Asymmetrie zwischen den beiden Antriebssträngen, etwa im Falle eines Bruchs in einem der beiden, erkannt und bei Auftreten einer solchen die Antriebsstränge durch die Bremsen festgelegt werden, um zu vermeiden, dass die Hochauftriebsklappen beider Seiten wesentlich gegeneinander verstellt werden.

Schließlich ist aus der US 3 841 589 ein Hochauftriebssystem eines Flugzeugs bekannt, welches eine durch zwei Motoren betriebene zentrale Antriebseinheit und über jeweilige Antriebsstränge mit dieser gekoppelte Hochauftriebsklappen enthält. An den Flügelenden sind die Drehung der Antriebsstränge erfassende Sensoren vorgesehen, welche eine Asymmetrie zwischen den beiden Antriebssträngen erfassen. Bei Auftreten einer solchen werden durch eine Steuereinrichtung die Motoren der zentralen Antriebseinheit angehalten. Auch hier soll vermieden werden, dass die Hochauftriebsklappen beider Seiten wesentlich gegeneinander verstellt werden.

Aufgabe der Erfindung ist es, ein Verfahren der eingangs genannten Art und eine Vorrichtung zur Durchführung eines solchen Verfahrens bereitzustellen, die bei gewünschter Reduktion von Masse und Betriebskosten des Systems eine Lastbegrenzung zu schaffen.

Die Erfindung löst die Aufgabe durch ein Verfahren und eine Vorrichtung gemäß den unabhängigen Ansprüchen. Gemäß dem erfindungsgemäßen Verfahren zur Lastbegrenzung werden an Komponenten des Antriebssystemes Zustandskenngrößen erfaßt und an eine Kontrolleinheit übermittelt. Diese Kontrolleinheit wertet die Zustandskenngrößen mittels eines Algorithmus zur Fehlererkennung aus und initialisiert im Fehlerfall ein kontrolliertes Abregeln der Antriebseinheit. Durch dieses erfindungsgemäße Verfahren ist es möglich, die fehlerbedingten Überlasten infolge Klemmfällen in einem Hochauftriebssystem zu begrenzen ohne eine mechanische Lastbegrenzereinrichtung zu realisieren.

Nachfolgend soll die Erfindung anhand eines in der Zeichnung dargestellten Ausführungsbeispiels näher erläutert werden. Es zeigen

Fig. 1    den schematischen Aufbau eines Klappenantriebssystems gemäß der Erfindung mit den dazugehörigen Antriebskomponenten und einem elektronisch geregelten Überlastschutz auf der Basis eines Vergleichs von Signalen;

Fig. 2    den schematischen Aufbau eines Klappenantriebssystems gemäß der Erfindung in einer weiteren Ausführungsform;

Fig. 3    ein Flussdiagramm eines Verfahrens zur Lastbegrenzung gemäß der Erfindung.

Fig. 4    eine Darstellung eines Schemas eines sogenannten verallgemeinerten Beobachters zur Fehlererkennung an einem Antriebsstrang; und

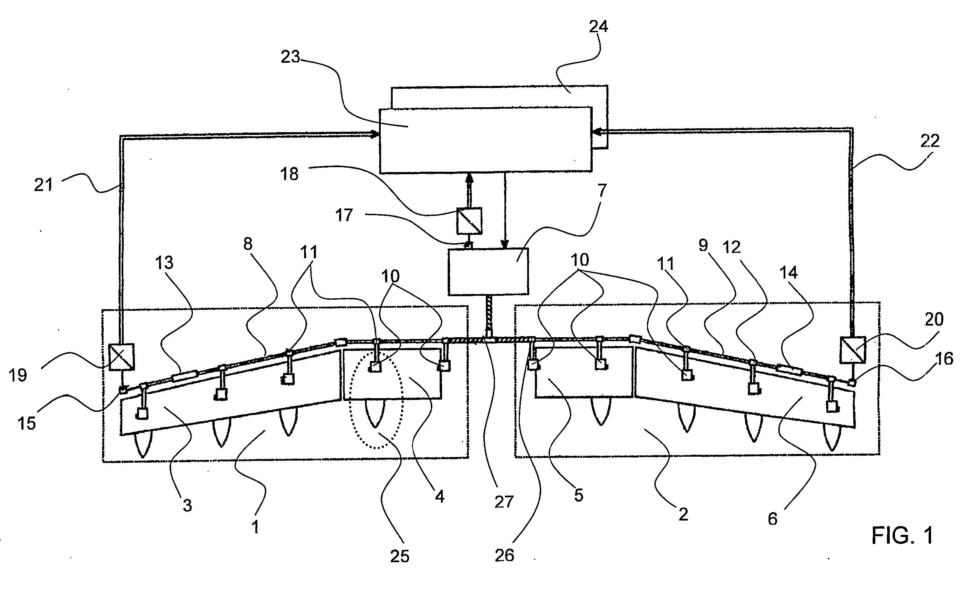

Das in Fig. 1 dargestellte Antriebssystem für Landeklappen ist statt mit einem herkömmlichen mechanischen Lastbegrenzer mit einem elektronisch geregelten Überlastschutz ausgestattet. Das Antriebssystem besteht dabei aus einem linken und einem rechten Teilsystem 1, 2, die jeweils zur Ansteuerung zweier Hochauftriebsklappen 3, 4 bzw. 5, 6 dienen, die an den Hinterkanten des Tragflügels angeordnet sind, wobei die beiden Teilsysteme 1, 2 symmetrisch zueinander aufgebaut sind. Die zur Positionierung der Klappen 3 bis 6 erforderliche mechanische Leistung wird von einer zentralen hochdynamisch leistungsregelbaren Antriebseinheit 7 bereitgestellt und jeweils über einen Antriebsstrang 8, 9 zu einer Reihe von mechanischen Aktuatoren 10 in den beiden Tragflächen geführt.

Hierzu gehören jeweils Abzweiggetriebe u.a. 11, 12. Die einzelnen Antriebsstationen 25 sind durch die jeweils zugeordneten Abzweiggetriebe 11 mit dem Antriebsstrang 8 verbunden. Ferner sind im äußeren Endbereich der Antriebsstränge 8, 9, hydraulisch betätigbare Bremsen 13, 14 angeordnet. Weiterhin befinden sich an den beiden äußeren Enden der Antriebsstränge 8, 9 jeweils ein Asymmetrie-Geber 15, 16, das ist ein Winkelpositionsgeber, mit denen die aktuelle Winkelposition der Welle am Ende jedes Antriebsstranges 8, 9 ermittelt und gegebenenfalls aus einer asymmetrischen Winkelposition eine asymmetrische Stellung der Klappen erkannt werden kann. Vervollständigt wird die Anordnung durch einen an der Antriebseinheit 7 befindlichen Winkelpositionsgeber 17, wobei die drei letztgenannten Komponenten jeweils über eine zugeordnete Transmittereinheit 18 bis 20 und entsprechende Signalleitungen 21, 22 mit einer speziellen Kontrolleinheit 23 verbunden sind, die mit einem Monitor zur Klemmfallerkennung ausgestattet ist.

Bedingt durch den symmetrischen Aufbau des Antriebssystems sowie der Klappen unterscheiden sich bei normalem Flugbetrieb die Zustände der beiden Teilsysteme nur geringfügig voneinander, da die beiden Teilsysteme zur Leistungsübertragung zu den Klappen in der linken und der rechten Tragfläche ein nahezu identisches dynamisches Verhalten aufweisen. Eine mögliche geringfügige Differenz wird im wesentlichen durch eine asymmetrische Luftlastverteilung an den beiden Tragflächen hervorgerufen, welche unter der Kenntnis von Spoilerausschlägen und Fluggeschwindigkeit analytisch mittels adaptiver Schwellwerte im Rahmen der Fehlererkennung berücksichtigt wird. In einem Klemmfall hingegen verändern sich die mechanischen Eigenschaften eines der beiden Teilsysteme signifikant und damit auch dessen dynamisches Verhalten. Bei einer identischen Anregung durch die Antriebseinheit 7 führt dies zu unterschiedlichen Zuständen in diesen beiden Teilsystemen. Dabei fungiert das fehlerfreie Teilsystem gleichsam als Referenzsystem für das fehlerbehaftete Teilsystem. Ein Signalvergleich zwischen den Zuständen an den jeweiligen Enden der beiden Antriebsstränge und/oder zwischen anderen symmetrischen Zuständen der linken und rechten Teilsysteme 1,2 führt daher in einem Klemmfall zu Differenzen, die im fehlerfreien Normalfall nicht entstehen würden und die erfindungsgemäß zur Detektion eines Klemmfalls genutzt werden.

Um ein Materialversagen auszuschließen, wird nun bei einer durch einen Klemmfall verursachten Überschreitung von vorgegebenen Schwellwerten für die Zustandsdifferenzen die Antriebseinheit 7 abgeregelt. Ergänzend wird durch eine vorgegebene Nachgiebigkeit der Elemente, Wellenabschnitt 27, zwischen der Antriebseinheit 7 und dem ersten Abzweiggetriebe 26, eine reduzierte Belastung der Abtriebe im Klemmfall erzielt, ohne die Dominanz eines Klemmfalls auf die Zustände eines Teilsystems zu verringern. Die Auswertung der zur Fehlererkennung in einem solchen Klemmfall notwendigen Signale und die Initialisierung einer kontrollierten Abregelung der zentralen Antriebseinheit 7 erfolgt dabei in der Kontrolleinheit 23, die ihrerseits Bestandteil eines Ansteuerungs- und Überwachungsrechners 24 für das Hochauftriebsklappensystem ist.

FIG. 1 zeigt somit eine Vorrichtung zur Lastbegrenzung in einem Flugzeughochauftriebssystem, wobei das Flugzeughochauftriebssystem ein verzweigtes Antriebssystem zur mechanischen Leistungsübertragung an Antriebsstationen 25 einzelner Segmente 3,4,5,6 von Landeklappen- und/oder Vorflügelklappensystemen, Positionssensoren 8,9,17 und eine Antriebseinheit 7 aufweist, wobei die Vorrichtung zur Lastbegrenzung eine Kontrolleinheit 23 aufweist, die mit den Positionssensoren 8,9,17 verbunden ist und ausgestaltet ist, Signale der Positionssensoren 8,9,17 zu verarbeiten und ein Signal zur Begrenzung der zugeführten Antriebsleistung zu erzeugen.

Die Positionssensoren weisen einen Winkelpositionsgeber 17 an der Antriebseinheit und/oder als Asymmetriegeber arbeitende Winkelpositionsgeber 15,16 an den Enden von Antriebssträngen 8,9 auf.

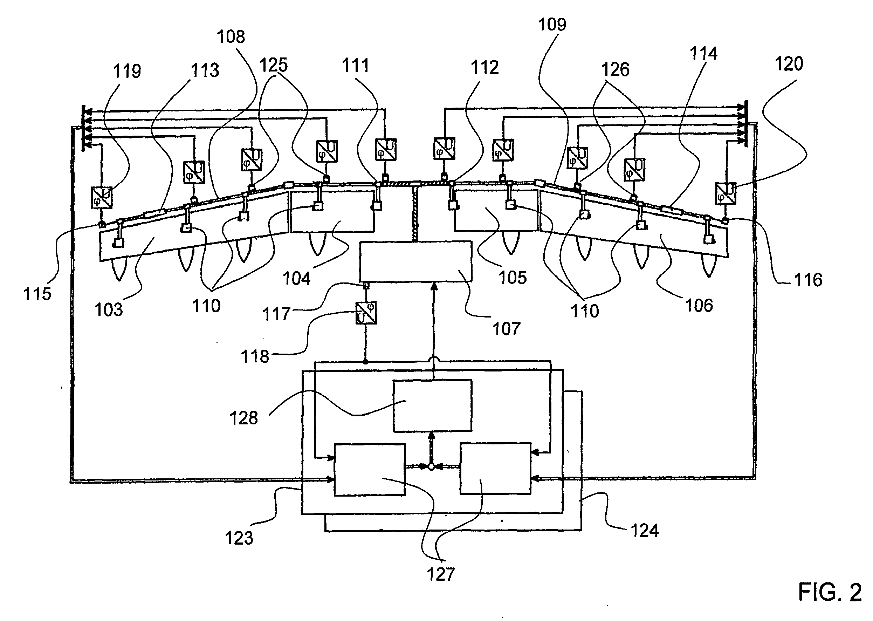

Bei dem in Fig. 2 dargestellten Klappenantriebssystem handelt es sich in Realisierung dieses Verfahrens um einen elektronisch geregelten Überlastschutz durch eine signalbasierte Diagnose. Das Antriebssystem ist weitgehend identisch zu dem in Fig. 1 dargestellten aufgebaut und dient zur Ansteuerung zweier Hochauftriebsklappen 103, 104 bzw. 105, 106 an den Hinterkanten eines Tragflügels über eine zentrale Antriebseinheit 107 sowie über zwei Antriebsstränge 108, 109, Abzweiggetriebe 111, 112 sowie mechanische Aktuatoren 110. Auch in diesem Fall sind im äußeren Endbereich der Antriebsstränge 108, 109 hydraulisch betätigbare Bremsen 113, 114 und Asymmetrie-Geber 115, 116. Ferner ist an der Antriebseinheit 107 ein Winkelpositionsgeber 117 vorgesehen. Zusätzlich zu den Transmittereinheiten 118 bis 120 und entsprechende Signalleitungen sind in diesem Fall jedoch an den Antriebssträngen 108, 109 jeweils in unmittelbarer Nähe der Abzweiggetriebe 111, 112 weitere Signalgeber 125, 126 vorgesehen, die ebenfalls mit der Kontrolleinheit 123 verbunden sind.

Eine besonders bevorzugte Ausführungsform der Erfindung benutzt Signale von Positionssensoren 17,15,16 aus Fig. 1 und zwei weitere Signale von Positionssensoren in unmittelbarer Nähe der jeweils ersten Abzweiggetriebe des linken und rechten Antriebsstrangs, um die Last im Antriebsstrang zu begrenzen. Durch diese Ausführungsform kann der Systemlastbegrenzer ersetzt werden.

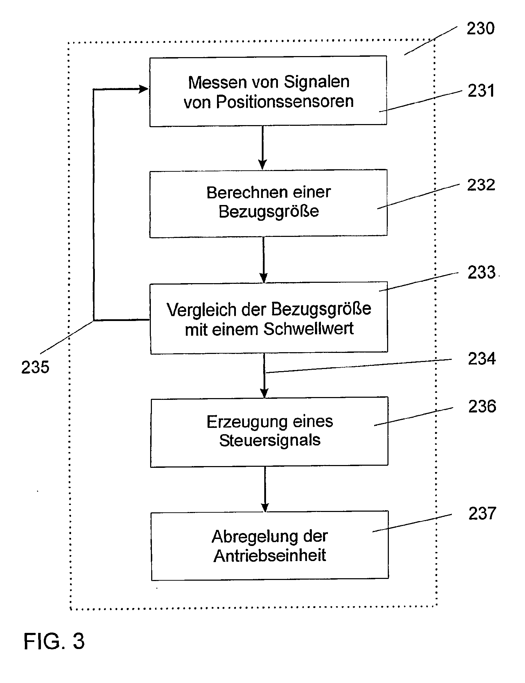

Fig. 3 beschreibt in Flussdiagramm 230 ein erfindungsgemäßes Verfahren zur Lastbegrenzung in einem Flugzeughochauftriebssystem, wobei das Flugzeughochauftriebssystem ein verzweigtes Antriebssystem zur mechanischen Leistungsübertragung an Antriebsstationen einzelner Segmente von Landeklappen- und/oder Vorflügelklappensystemen, Positionssensoren und eine Antriebseinheit aufweist.

In Verfahrensschritt 231 erfolgt das Messen von Signalen von mindestens zwei Positionssensoren. Diese Signale repräsentieren die Winkelpositionen an den Positionen der Positionssensoren im Antriebsstrang. Es können auch mehrere Positionssensoren entlang des Antriebsstrangs verwendet werden. Diese Signale werden der Kontrolleinheit 23 aus FIG. 1 oder 123 aus FIG. 2 zugeführt, in welcher auch die nächsten Verfahrensschritte erfolgen.

In Verfahrensschritt 232 erfolgt das Berechnen mindestens einer Bezugsgröße aus den gemessenen Signalen der Positionssensoren. Die Bezugsgröße ist der Indikator zum Erkennen eines Klemmfalles und somit eines Überlastfalles. Auf die Bestimmung der Bezugsgröße wird unten eingegangen.

Im nächsten Verfahrensschritt 233 erfolgt ein Vergleichen jeder Bezugsgröße mit einem entsprechenden aus einer maximal zulässigen Last vorbestimmten Schwellwert. Es können verschiedene Bezugsgrößen bestimmt werden, denen gleiche oder unterschiedliche Schwellwerte entsprechen.

Solange keine der Bezugsgrößen den entsprechenden Schwellwert erreicht oder überschreitet, erfolgt eine Verzweigung gemäß Pfeil 235 zu Verfahrensschritt 231, und es erfolgen weitere Messungen von Signalen von Positionssensoren.

Wenn mindestens eine der Bezugsgrößen den entsprechenden Schwellwert erreicht oder überschreitet, erfolgt eine Verzweigung gemäß Pfeil 234 zu Verfahrensschritt 236, dem Erzeugen eines Steuersignals zur Begrenzung der Antriebsleistung in der Kontrolleinheit 23 aus FIG. 1 oder 123 aus FIG. 2.

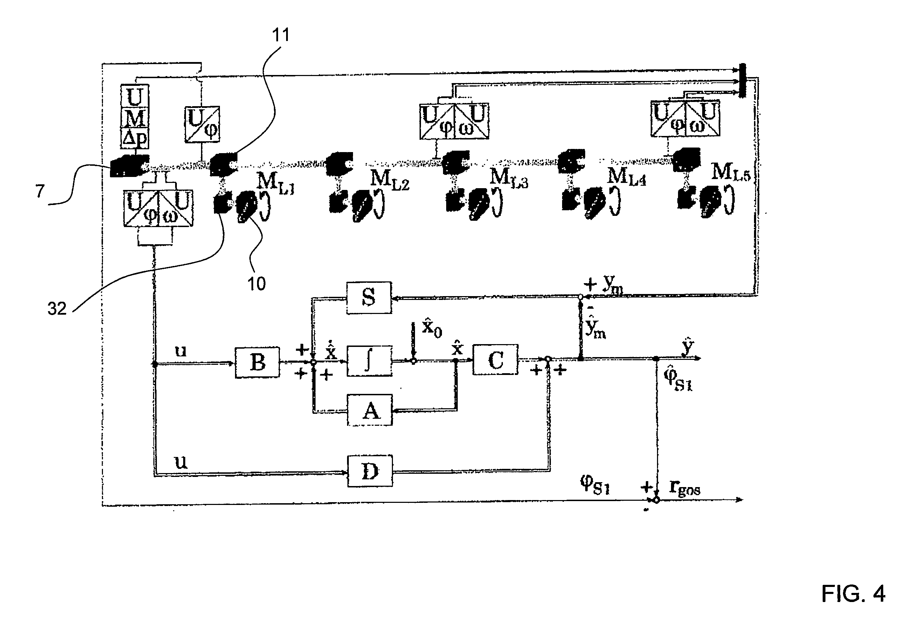

In Verfahrensschritt 237 wird unter Verwendung des Steuersignals die Antriebsleistung der Antriebseinheit begrenzt. Dabei wird das erzeugte Steuersignal der Kontrolleinheit an den Überwachungsrechner 24 aus FIG. 1 oder 124 in FIG. 4 weitergeleitet, der ein kontrolliertes Abregeln der Leistungszufuhr des Systems durch die Antriebseinheit initiiert. Vorteilhaft weist das Antriebssystem eine hochdynamischen Antriebseinheit zur schnellen Regelung der Antriebsleistung auf.

Aus den gemessenen Signalen von zwei Positionssensoren und der Kenntnis der Nachgiebigkeit (Kehrwert der Steifigkeit) des Antriebsstrangs zwischen den Positionen der Positionssensoren, kann die Last in diesem Abschnitt berechnet werden. Entsprechend der Anzahl der Positionen der Positionssensoren im Antriebstrang kann die Lastverteilung des gesamten Antriebstranges berechnet werden. Aufgrund dieser Zusammenhänge und einer konstruktiv vorgegebenen oder ermittelbaren maximalen Last des Gesamtsystems im fehlerfreien Zustand sind verschiedene Bezugsgrößen und ein entsprechender Schwellwert bestimmbar.

Weil die Differenz der Last im Antriebsstrang vor und hinter einem Abzweiggetriebe eine zu begrenzende Last der Abtriebsstränge darstellt, enthält eine der Bezugsgrößen in einer bevorzugten Ausführungsform mindestens eine Differenz zwischen gemessenen Signalen von mindestens zwei Positionssensoren.

In einer weiteren bevorzugten Ausführungsform werden an mindestens einem Positionssensor zwei Signale in einem bekannten zeitlichen Abstand gemessen, um daraus die Winkelgeschwindigkeit zu bestimmen. Die Differenz von Winkelgeschwindigkeiten zwischen unterschiedlich positionierten Positionssensoren ist ein Indikator für ein abruptes Verzögern der Winkelgeschwindigkeit an einer Stelle des Antriebsstrangs. Folglich erkennt eine entsprechende Bezugsgröße die ein Funktional der Differenz zwischen Winkelgeschwindigkeiten ist, in Verbindung mit einem geeigneten Schwellwert, einen harten Klemmfall, der unweigerlich zu einer Überlast führen würde. Aufgrund dieser Zusammenhänge und einer konstruktiv vorgegebenen oder ermittelbaren maximalen Drehzahldifferenz im fehlerfreien Zustand sind verschiedene Bezugsgrößen und ein entsprechender Schwellwert bestimmbar.

Vorzugsweise enthält eine der Bezugsgrößen ein Funktional mit einer Beschleunigung. Die zur Festlegung der Bezugsgröße und zur Ermittlung des zugehörigen Schwellwerts erforderlichen Überlegungen erschließen sich dem Fachmann ähnlich wie bei der Winkelgeschwindigkeit.

In einer weiteren bevorzugten Ausführungsform verwendet eine der Bezugsgrößen eine berechnete Last mit ähnlichen Überlegungen wie oben.

In einer weiteren bevorzugten Ausführungsform wird die Antriebsleistung der Antriebseinheit ermittelt, um genauer auf die Lastverteilung im Antriebsstrang zu schließen.

In noch einer bevorzugten Ausführungsform wird ein Schwellwert einem Betriebszustand entsprechend vorbestimmt. Damit wird in jedem Betriebszustand des Systems die Berücksichtigung der geringstmöglichen Belastung im Klemmfall möglich.

In einer anderen bevorzugten Ausführungsform enthält eine der Bezugsgrößen ein Funktional von einer mittels mathematischer Verfahren geschätzten Zustandsgröße aus einer Gruppe umfassend Position, Geschwindigkeit und Last. So kann ein modellbasiertes System eine schnellere Klemmfallerkennung ermöglichen bei gleichzeitiger Reduzierung der Anzahl der Sensoren.

Fig. 4 zeigt die Realisierung eines solchen modellbasierten Systems. Insbesondere sowohl die Sensorpositionen als auch den strukturellen Aufbau eines Beobachters. Neben dem Eingang

$$(1) \qquad u = [\varphi_{PCU} \quad \omega_{PCU}]^T$$

ist die Differenz zwischen der gemessenen Ausgangsgröße

$$(2) \qquad y_m = [\varphi_{S3} \quad \omega_{S3} \quad \varphi_{S5} \quad \omega_{S5} \quad M_{PCU}]^T$$

und der Ausgangsgröße des Modells als zusätzliche Eingangsgröße auf den Beobachter zurückgeführt.

Untersuchungen zur Zustandsschätzung mit verschiedenen Sensorkonfigurationen haben gezeigt, daß diese Wahl der Sensoranordnung als sensorminimal anzusehen ist. Die bereits in heutigen Hochauftriebssystemen implementierte Sensorik am Ende der Wellentransmission und an der Antriebseinheit muss lediglich durch einen zentral zwischen diesen Positionen liegenden Sensor ergänzt werden, um die notwendige Güte des Beobachters zu gewährleisten.

Eine Beobachterbank zur Erkennung von Aktuatorfehlern zeichnet sich dadurch aus, dass man zum Betrieb des Beobachters jeweils alle verfügbaren Ein- und Ausgänge des Systems benutzt, aber einen einzelnen definierten Eingang bzw. Ausgang nicht berücksichtigt. Die Bezugsgröße

$$(3) \qquad r_{gos} = \varphi_{S1} - \hat{\varphi}_{S1}$$

zeichnet sich in erster Linie durch die fehlende Rückführung des Positionssignals $\varphi_{S1}$ auf den Beobachter aus. Weil im fehlerfreien Zustand dieser Wert durch den Beobachter richtig abgebildet wird und im Klemmfall nicht, entsteht durch einen Klemmfall eine signifikante Differenz zwischen der realen und der geschätzten Position. Der Beobachter nach Fig. 4 kann folglich im Klemmfall die entstehenden Zustandsschätzfehler nicht beheben. Der Schwellwert ist dabei so gewählt, dass die Bezugsgröße im fehlerfreien Fall kleiner ist als der Schwellwert.

**Patentansprüche**

1. Verfahren zur Lastbegrenzung in einem Flugzeughochauftriebssystem, wobei das Flugzeughochauftriebssystem ein verzweigtes Antriebssystem zur mechanischen Leistungsübertragung an Antriebsstationen (25) einzelner Segmente (3, 4, 5, 6; 103, 104, 105, 106) von Landeklappen- und/oder Vorflügelklappensystemen über jeweilige Antriebsstränge (8, 9; 108, 109), Positionssensoren (15, 16, 17; 115, 116, 117) und eine Antriebseinheit (7; 107) aufweist, bei dem Signale von mindestens zwei Positionssensoren gemessen werden (231),
**gekennzeichnet durch**

   - Berechnen (232) mindestens einer die Last in den Antriebssträngen (8, 9; 108, 109) repräsentierenden Bezugsgröße aus den gemessenen Signalen;

- Vergleichen (233) jeder Bezugsgröße mit einem entsprechenden aus einer maximal zulässigen Last vorbestimmten Schwellwert; und

- Erzeugen (236) eines Steuersignals zum kontrollierten Abregeln der Leistungszufuhr zu der Antriebseinheit (7; 107) im Sinne einer Begrenzung der Antriebsleistung derselben, wenn mindestens eine der Bezugsgrößen den Schwellwert erreicht oder überschreitet.

2. Verfahren zur Lastbegrenzung nach Anspruch 1, **dadurch gekennzeichnet, dass** eine der Bezugsgrößen mindestens eine Differenz zwischen gemessenen Signalen von mindestens zwei Positionssensoren enthält.

3. Verfahren nach Anspruch 1 oder 2, **dadurch gekennzeichnet, dass** an mindestens einem Positionssensor zwei Signale in einem bekannten zeitlichen Abstand gemessen werden.

4. Verfahren nach Anspruch 3, **dadurch gekennzeichnet, dass** eine der Bezugsgrößen ein Funktional der Winkelgeschwindigkeit enthält.

5. Verfahren nach einem der Ansprüche 3 oder 4, **dadurch gekennzeichnet, dass** eine der Bezugsgrößen ein Funktional der Beschleunigung enthält.

6. Verfahren nach einem der Ansprüche 1 bis 5, **dadurch gekennzeichnet, dass** eine der Bezugsgrößen eine berechnete Last verwendet.

7. Verfahren nach einem der Anspruch 1 bis 6, **dadurch gekennzeichnet, dass** die Antriebsleistung der Antriebseinheit ermittelt wird.

8. Verfahren nach einem der Ansprüche 1 bis 7, **dadurch gekennzeichnet, dass** Signale von jeweils an den Enden der Antriebsstränge (8, 9; 108, 109) befindlichen Positionssensoren (15, 16; 115, 116) und von einem an der Antriebseinheit (7; 107) befindlichen Winkelpositionsgeber (17; 117) erfasst werden und aus den Signalen die mindestens eine die Last im Antriebsstrang (8, 9; 108, 109) repräsentierende Bezugsgröße berechnet wird.

9. Verfahren nach Anspruch 8, **dadurch gekennzeichnet, dass** ein Signalvergleich zwischen jeweiligen, der linken und rechten Tragfläche zugeordneten Teilsystemen erfolgt, die jeweils einen Antriebsstrang (8, 9; 108, 109), einen am Ende des Antriebsstrangs (8, 9; 108, 109) befindlichen Positionsgeber (15, 16; 115, 116) und den an der Antriebseinheit (7; 107) befindlichen Winkelpositionsgeber (17; 117) umfassen.

10. Verfahren nach Anspruch 8 oder 9, **dadurch gekennzeichnet, dass** zur Berechnung der mindestens einen die Last im Antriebsstrang (8, 9, 108, 109) repräsentierenden Bezugsgröße zusätzlich Signale von an Abzweiggetrieben (111, 112) der Antriebsstränge (108, 109) vorgesehenen Positionssensoren (125, 126) benutzt werden.

11. Verfahren nach einem der Ansprüche 1 bis 10, **dadurch gekennzeichnet, dass** unter Verwendung des Steuersignals die Antriebsleistung der Antriebseinheit hochdynamisch begrenzt wird (237).

12. Verfahren nach einem der Ansprüche 1 bis 11, **dadurch gekennzeichnet, dass** ein Schwellwert einem Betriebszustand entsprechend vorbestimmt wird.

13. Verfahren nach einem der Ansprüche 1 bis 12, **dadurch gekennzeichnet, dass** eine der Bezugsgrößen ein Funktional von einer mittels mathematischer Verfahren geschätzten Zustandsgröße aus einer Gruppe umfassend Position, Geschwindigkeit und Last enthält.

14. Vorrichtung zur Lastbegrenzung in einem Flugzeughochauftriebssystem, wobei das Flugzeughochauftriebssystem ein verzweigtes Antriebssystem zur mechanischen Leistungsübertragung an Antriebsstationen (25) einzelner Segmente (3, 4, 5, 6; 103, 104, 105, 106) von Landeklappen- und/oder Vorflügelklappensystemen über jeweilige Antriebsstränge (8, 9; 108, 109), Positionssensoren (15, 16, 17; 115, 116, 117) und eine Antriebseinheit (7; 107) aufweist, **dadurch gekennzeichnet, dass** die Vorrichtung zur Lastbegrenzung eine Kontrolleinheit (23; 123) aufweist, die mit den Positionssensoren (15, 16, 17; 115, 116, 117) verbunden ist und ausgestaltet ist, Signale der Positionssensoren (15, 16, 17; 115, 116, 117) zu verarbeiten und durch Vergleich mindestens einer die Last in den Antriebssträngen (8, 9; 108, 109) repräsentierenden Bezugsgröße mit einem entsprechenden, aus einer maximal zulässigen Last vorbestimmten Schwellwert ein Steuersignal zum kontrollierten Abregeln der Leistungszufuhr zu der Antriebseinheit (7; 107) im Sinne einer Begrenzung der zugeführten Antriebsleistung zu erzeugen.

15. Vorrichtung nach Anspruch 14, **dadurch gekennzeichnet, dass** die Positionssensoren einen Winkelpositionsgeber (17; 117) an der Antriebseinheit (7; 107) und/oder als Asymmetriegeber arbeitende Winkelpositionsgeber (15, 16; 115, 116) an den Enden der Antriebsstränge (8, 9; 108, 109) aufweisen.

16. Vorrichtung nach Anspruch 14 oder 15, **dadurch gekennzeichnet, dass** die Positionssensoren Winkelpositionsgeber (125, 126) an Abzweiggetrieben (111, 112) der Antriebsstränge (108, 109) aufweisen.

17. Vorrichtung nach einem der Ansprüche 14 bis 16, **dadurch gekennzeichnet, dass** jeweils an den Enden der Antriebsstränge (8, 9; 108, 109) befindliche Positionssensoren (15, 16; 115, 116) und ein an der Antriebseinheit (7; 107) befindlicher Winkelpositionsgeber (17; 117) vorgesehen sind, und dass die Kontrolleinheit (23; 123) dazu vorgesehen ist, aus deren Signalen die mindestens eine die Last im Antriebsstrang (8, 9; 108, 109) repräsentierende Bezugsgröße zu berechnen.

18. Vorrichtung nach Anspruch 17, **dadurch gekennzeichnet, dass** die Kontrolleinheit (23; 123) dazu vorgesehen ist, einen Signalvergleich zwischen jeweiligen, der linken und rechten Tragfläche zugeordneten Teilsystemen vorzunehmen, die jeweils einen Antriebsstrang (8, 9; 108, 109), einen am Ende des Antriebsstrangs (8, 9; 108, 109) befindlichen Positionsgeber (15, 16; 115, 116) und den an der Antriebseinheit (7; 107) befindlichen Winkelpositionsgeber (17; 117) umfassen.

19. Vorrichtung nach Anspruch 17 oder 18, **dadurch gekennzeichnet, dass** zusätzlich an Abzweiggetrieben (111, 112) der Antriebsstränge (108, 109) Positionssensoren (125, 126) vorgesehen sind, deren Signale zur Berechnung der mindestens einen die Last im Antriebsstrang (8, 9; 108, 109) repräsentierenden Bezugsgröße von benutzt werden.

20. Vorrichtung nach einem der Ansprüche 14 bis 19, **dadurch gekennzeichnet, dass** die Antriebseinheit hochdynamisch leistungsregelbar ist.

21. Vorrichtung nach einem der Ansprüche 14 bis 20, **dadurch gekennzeichnet, dass** zwischen der Antriebseinheit (7) und dem ersten Abzweiggetriebe (26) ein Wellenabschnitt (27) definierter hoher Nachgiebigkeit angeordnet ist.

**Claims**

1. A method for load limiting in an aircraft high-lift system, with the aircraft high-lift system having a branching drive system for mechanical power transmission to drive stations (25) of individual segments (3, 4, 5, 6; 103, 104, 105, 106) of landing-flap and/or leading-edge slat systems via respective drive trains (8, 9; 108, 109), position sensors (15, 16, 17; 115, 116, 117) and a drive unit (7; 107), in which signals are measured (231) by at least two position sensors, **characterized by**:

   - calculation (232) of at least one reference variable, which represents the load in the drive trains (8, 9; 108, 109) from the measured signals;
   - comparison (233) of each reference variable with a corresponding threshold value which is predetermined from a maximum permissible load; and
   - production (236) of a control signal for monitored limiting of the power supply to the drive unit (7; 107) in the sense of limiting its drive power when at least one of the reference variables reaches or exceeds the threshold value.

2. The method for load limiting as claimed in claim 1, **characterized in that** one of the reference variables includes at least one difference between measured signals from at least two position sensors.

3. The method as claimed in claim 1 or 2, **characterized in that** two signals are measured with a known time interval at at least one position sensor.

4. The method as claimed in claim 3, **characterized in that** one of the reference variables includes a function of the angular velocity.

**5.** The method as claimed in either of claims 3 and 4, **characterized in that** one of the reference variables includes a function of the acceleration.

**6.** The method as claimed in one of claims 1 to 5, **characterized in that** one of the reference variables uses a calculated load.

**7.** The method as claimed in one of claims 1 to 6, **characterized in that** the drive power of the drive unit is determined.

**8.** The method as claimed in one of claims 1 to 7, **characterized in that** signals from position sensors (15, 16; 115, 116) which are located at each of the ends of the drive trains (8, 9; 108, 109) and from an angle position transmitter (17; 117) which is located on the drive unit (7; 107) are detected, and the at least one reference variable, which represents the load in the drive train (8, 9; 108, 109), is calculated from the signals.

**9.** The method as claimed in claim 8, **characterized in that** a signal comparison is carried out between respective subsystems which are associated with the port and starboard wings and each comprise a drive train (8, 9; 108, 109), a position transmitter (15, 16; 115, 116) which is located at the end of the drive train (8, 9; 108, 109), and the angle position transmitter (17; 117) which is located on the drive unit (7; 107).

**10.** The method as claimed in claim 8 or 9, **characterized in that** signals from position sensors (125, 126) which are provided on branching transmissions (111, 112) of the drive trains (108, 109) are additionally used in order to calculate the at least one reference variable which represents the load in the drive train (8, 9; 108, 109).

**11.** The method as claimed in one of claims 1 to 10, **characterized in that** the drive power of the drive unit is limited (237) in a highly dynamic manner using the control signal.

**12.** The method as claimed in one of claims 1 to 11, **characterized in that** a threshold value is predetermined appropriately for an operating state.

**13.** The method as claimed in one of claims 1 to 12, **characterized in that** one of the reference variables includes a function of a state variable, which is estimated by means of mathematical methods, from a group comprising position, velocity and load.

**14.** An apparatus for load limiting in an aircraft high-lift system, with the aircraft high-lift system having a branching drive system for mechanical power transmission to drive stations (25) of individual segments (3, 4, 5, 6; 103, 104, 105, 106) of landing-flap and/or leading-edge slat systems via respective drive trains (8, 9; 108, 109), position sensors (15, 16, 17; 115, 116, 117) and a drive unit (7; 107), **characterized in that** the apparatus has a monitoring unit (23; 123) for load limiting which is connected to the position sensors (15, 16, 17; 115, 116, 117) and is designed to process signals from the position sensors (15, 16, 17; 115, 116, 117) and, by comparison of at least one reference variable which represents the load in the drive trains (8, 9; 108, 109) with a corresponding threshold value which is predetermined from a maximum permissible load, to produce a control signal for monitored limiting of the power supply to the drive unit (7; 107) in the sense of limiting the drive power that is supplied.

**15.** The apparatus as claimed in claim 14, **characterized in that** the position sensors have an angle position transmitter (17; 117) on the drive unit (7; 107), and/or angle position transmitters (15, 16; 115, 116), which operate as asymmetry transmitters, at the ends of the drive trains (8, 9; 108, 109).

**16.** The apparatus as claimed in claim 14 or 15, **characterized in that** the position sensors have angle position transmitters (125, 126) on branching transmissions (111, 112) of the drive trains (108, 109).

**17.** The apparatus as claimed in one of claims 14 to 16, **characterized in that** position sensors (15, 16; 115, 116) which are located at each of the ends of the drive trains (8, 9; 108, 109) and an angle position transmitter (17; 117) which is located on the drive unit (7; 107) are provided, and **in that** the monitoring unit (23; 123) is provided in order to calculate the at least one reference variable, which represents the load in the drive train (8, 9; 108, 109), from its signals.

**18.** The apparatus as claimed in claim 17, **characterized in that** the monitoring unit (23; 123) is provided to carry out a signal comparison between respective subsystems which are associated with the port and starboard wings and each comprise a drive train (8, 9; 108, 109), a position transmitter (15, 16; 115, 116) which is located at the end of the drive train (8, 9; 108, 109), and the angle position transmitter (17; 117) which is located on the drive unit (7; 107).

19. The apparatus as claimed in claim 17 or 18, **characterized in that** position sensors (125, 126) are additionally provided on branching transmissions (111, 112) of the drive trains (108, 109), and their signals are used in order to calculate the at least one reference variable which represents the load in the drive train (8, 9; 108, 109).

20. The apparatus as claimed in one of claims 14 to 19, **characterized in that** the power of the drive unit can be controlled in a highly dynamic manner.

21. The apparatus as claimed in one of claims 14 to 20, **characterized in that** a shaft section (27) of defined high flexibility is arranged between the drive unit (7) and the first branching transmission (26).


**Revendications**

1. Procédé pour limiter la charge dans un système d'hypersustentation pour avion, le système d'hypersustentation pour avion présentant un système d'entraînement ramifié pour la transmission de puissance mécanique à des stations d'entraînement (25) de différents segments (3, 4, 5, 6 ; 103, 104, 105, 106) de systèmes de volets d'atterrissage et/ou de becs de bord d'attaque par l'intermédiaire de lignes d'entraînement (8, 9 ; 108, 109) respectives, des capteurs de position (15, 16, 17 ; 115, 116, 117) et une unité d'entraînement (7 ; 107), selon lequel on mesure les signaux d'au moins deux capteurs de position (231),
**caractérisé par**

   - calcul (232) d'au moins une grandeur de référence représentant la charge dans les lignes d'entraînement (8, 9 ; 108, 109) à partir des signaux mesurés ;
   - comparaison (233) de chaque grandeur de référence avec une valeur seuil correspondante, prédéterminée à partir d'une charge maximale admissible ; et
   - génération (236) d'un signal de commande pour diminuer de manière contrôlée l'apport de puissance à l'unité d'entraînement (7 ; 107) afin de limiter la puissance d'entraînement de cette dernière quand au moins une des grandeurs de référence atteint ou dépasse la valeur seuil.

2. Procédé pour limiter la charge selon la revendication 1, **caractérisé en ce qu'**une des grandeurs de référence contient au moins une différence entre des signaux mesurés d'au moins deux capteurs de position.

3. Procédé selon la revendication 1 ou 2, **caractérisé en ce que** l'on mesure sur au moins un capteur de position deux signaux à un intervalle de temps connu.

4. Procédé selon la revendication 3, **caractérisé en ce qu'**une des grandeurs de référence contient une fonctionnelle de la vitesse angulaire.

5. Procédé selon l'une des revendications 3 ou 4, **caractérisé en ce qu'**une des grandeurs de référence contient une fonctionnelle de l'accélération.

6. Procédé selon l'une des revendications 1 à 5, **caractérisé en ce qu'**une des grandeurs de référence utilise une charge calculée.

7. Procédé selon l'une des revendications 1 à 6, **caractérisé en ce que** l'on détermine la puissance d'entraînement de l'unité d'entraînement.

8. Procédé selon l'une des revendications 1 à 7, **caractérisé en ce que** l'on saisit des signaux de capteurs de position (15, 16 ; 115, 116) situés à chaque extrémité des lignes d'entraînement (8, 9 ; 108, 109) et d'un capteur de position angulaire (17 ; 117) situé sur l'unité d'entraînement (7 ; 107) et que l'on calcule à partir des signaux ladite au moins une grandeur de référence représentant la charge dans la ligne d'entraînement (8, 9 ; 108, 109).

9. Procédé selon la revendication 8, **caractérisé en ce que** l'on effectue une comparaison de signaux entre des sous-systèmes respectifs associés à la surface portante gauche et droite, qui comprennent chacun une ligne d'entraînement (8, 9 ; 108, 109), un capteur de position (15, 16 ; 115, 116) situé à l'extrémité de la ligne d'entraînement (8, 9 ; 108, 109) et le capteur de position angulaire (17 ; 117) situé sur l'unité d'entraînement (7 ; 107).

**10.** Procédé selon la revendication 8 ou 9, **caractérisé en ce que**, pour calculer ladite au moins une grandeur de référence représentant la charge dans la ligne d'entraînement (8, 9 ; 108, 109), on utilise en plus des signaux de capteurs de position (125, 126) prévus sur des réducteurs auxiliaires (111, 112) des lignes d'entraînement (108, 109).

**11.** Procédé selon l'une des revendications 1 à 10, **caractérisé en ce qu'**en utilisant le signal de commande, la puissance d'entraînement de l'unité d'entraînement est limitée de manière hautement dynamique (237).

**12.** Procédé selon l'une des revendications 1 à 11, **caractérisé en ce qu'**une valeur seuil est prédéterminée en fonction d'un état de fonctionnement.

**13.** Procédé selon l'une des revendications 1 à 12, **caractérisé en ce qu'**une des grandeurs de référence contient une fonctionnelle d'une grandeur d'état estimée au moyen de procédés mathématiques parmi un groupe comprenant position, vitesse et charge.

**14.** Dispositif pour limiter la charge dans un système d'hypersustentation pour avion, le système d'hypersustentation pour avion présentant un système d'entraînement ramifié pour la transmission de puissance mécanique à des stations d'entraînement (25) de différents segments (3, 4, 5, 6 ; 103, 104, 105, 106) de systèmes de volets d'atterrissage et/ou de becs de bord d'attaque par l'intermédiaire de lignes d'entraînement (8, 9 ; 108, 109) respectives, des capteurs de position (15, 16, 17 ; 115, 116, 117) et une unité d'entraînement (7 ; 107), **caractérisé en ce que** le dispositif pour limiter la charge présente une unité de contrôle (23 ; 123) qui est reliée aux capteurs de position (15, 16, 17 ; 115, 116, 117) et conçue pour traiter des signaux des capteurs de position (15, 16, 17 ; 115, 116, 117) et, par comparaison d'au moins une grandeur de référence représentant la charge dans les lignes d'entraînement (8, 9 ; 108, 109) avec une valeur seuil correspondante, prédéterminée à partir d'une charge maximale admissible, générer un signal de commande pour diminuer de manière contrôlée l'apport de puissance à l'unité d'entraînement (7 ; 107) afin de limiter la puissance d'entraînement apportée.

**15.** Dispositif selon la revendication 14, **caractérisé en ce que** les capteurs de position présentent un capteur de position angulaire (17 ; 117) sur l'unité d'entraînement (7 ; 107) et/ou des capteurs de position angulaire (15, 16 ; 115, 116) travaillant comme capteurs asymétriques sur les extrémités des lignes d'entraînement (8, 9 ; 108, 109).

**16.** Dispositif selon la revendication 14 ou 15, **caractérisé en ce que** les capteurs de position présentent des capteurs de position angulaire (125, 126) sur des réducteurs auxiliaires (111, 112) des lignes d'entraînement (108, 109).

**17.** Dispositif selon l'une des revendications 14 à 16, **caractérisé en ce que** des capteurs de position (15, 16 ; 115, 116) situés à chaque extrémité des lignes d'entraînement (8, 9 ; 108, 109) et un capteur de position angulaire (17 ; 117) situé sur l'unité d'entraînement (7 ; 107) sont prévus et que l'unité de contrôle (23 ; 123) est prévue pour calculer ladite au moins une grandeur de référence représentant la charge dans la ligne d'entraînement (8, 9 ; 108, 109) à partir de leurs signaux.

**18.** Dispositif selon la revendication 17, **caractérisé en ce que** l'unité de contrôle (23 ; 123) est prévue pour effectuer une comparaison de signaux entre des sous-systèmes respectifs associés à la surface portante gauche et droite, qui comprennent chacun une ligne d'entraînement (8, 9 ; 108, 109), un capteur de position (15, 16 ; 115, 116) situé à l'extrémité de la ligne d'entraînement (8, 9 ; 108, 109) et le capteur de position angulaire (17 ; 117) situé sur l'unité d'entraînement (7 ; 107).

**19.** Dispositif selon la revendication 17 ou 18, **caractérisé en ce que** des capteurs de position (125, 126) sont prévus en plus sur des réducteurs auxiliaires (111, 112) des lignes d'entraînement (108, 109), dont les signaux sont utilisés pour calculer ladite au moins une grandeur de référence représentant la charge dans la ligne d'entraînement (8, 9 ; 108, 109).

**20.** Dispositif selon l'une des revendications 14 à 19, **caractérisé en ce que** l'unité d'entraînement est réglable en puissance de manière hautement dynamique.

**21.** Dispositif selon l'une des revendications 14 à 20, **caractérisé en ce qu'**une section d'arbre (27) de flexibilité élevée définie est disposée entre l'unité d'entraînement (7) et le premier réducteur auxiliaire (26).

FIG. 1

FIG. 2

FIG. 3

FIG. 4

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0922633 A2
- US 4260121 A
- US 3841589 A